# EUROPÄISCHE PATENTSCHRIFT

(11) **EP 1 507 324 B1**
(45) Veröffentlichungstag und Bekanntmachung des Hinweises auf die Patenterteilung: **21.06.2006**
(21) Anmeldenummer: 03018433.7
(22) Anmeldetag: 14.08.2003
(51) Int. Cl.: H02G 1/12

(54) **Abisolierwerkzeug Uniplus**
Uniplus stripping device
Dispositif de dénudage Uniplus

(43) Veröffentlichungstag der Anmeldung: 16.02.2005
(73) Patentinhaber: KRAMPE KG, 59387 Ascheberg-Herbern (DE)
(72) Erfinder: Grosserichter, Heinrich, 59387 Ascheberg-Herbern (DE)
(74) Vertreter: Philipp, Matthias

(56) Entgegenhaltungen:
- DE-A- 3 222 326
- DE-A- 3 310 523
- DE-U- 29 814 771
- US-A- 2 683 308

## Beschreibung

Die Erfindung betrifft ein Abisolierwerkzeug zum Entfernen von Außenisolierungen und/oder Aderisolierungen elektrischer ein- oder mehradriger Kabel, bestehend aus an ihren Längsseiten verbundenen verschwenkbaren Halbschalen mit Griffnasen und mit Messersätzen quer zur Längsrichtung der Halbschalen.

Derartige Abisolierwerkzeuge sind in unterschiedlichen Ausführungen für eine Vielzahl von verschiedenen elektrischen Kabeln und Leitungen bekannt.

Für die Bearbeitung von elektrischen Kabeln mit einer Außenisolierung und mindestens einer innenliegenden Ader mit eigener Isolierung werden in der Praxis zum Teil unterschiedliche Werkzeuge verwendet, da die Durchmesser der zu entfernenden Isolierungen unterschiedliche Größen aufweisen.

Hierzu sind verschiedene Lösungen vorgeschlagen worden. So beschreibt z. B. die DE 33 10 523 C2 ein Abmantelungswerkzeug mit zusätzlichen Abisolierschneiden für die Innenleiter von ein- oder mehradrigen Kabeln. Hierbei sind die zusätzlichen Schneiden an den Längskanten der Halbschalen des Werkzeuges angebracht.

Dieses Werkzeug hat sich in der Praxis bewährt, als nachteilig hat sich jedoch herausgestellt, daß die Handhaltung bei der Bearbeitung des Kabels vom Wechsel des Außenmantels zur innenliegenden Ader um 90° gedreht werden muß. Dieses ist besonders bei Abisoliervorgängen in beispielsweise engen Klemmenkästen oder Verteilerdosen umständlich und zum Teil auch schwierig. Ein weiterer Nachteil besteht darin, daß die Schneiden in den Längsseiten der Halbschalen der gemeinsamen Schwenkachse der beiden Halbschalen gegenüberliegen und somit nur eine begrenzte Abisolierlänge der Einzelader zulassen.

DE 298 14 771 U, welche als nächstliegender Stand der Technik ansgesehen wird, beschreibt ein derartiges Werkzeug, bei welchem für die Abmantelung der äußeren Kabelisolierung und einer inneren Kabeladerisolierung zwei quer zur Backen-/Längsrichtung stehende Messer mit dem unterschiedlichen Spaltabstand von gegenüberliegenden Schneiden verwendet werden. Dieses Werkzeug besteht aus zwei Schalen, in deren Stirnseite ein Messersatz mit den sich gegenüberliegenden Schneiden eingebracht ist. Diese Schneiden sind in unterschiedlicher Ausführung nebeneinander liegend in einem Stück ausgebildet. Zwischen zwei Schneiden befindet sich eine Anschlagnase. Dadurch ist es möglich, daß die beidseitig von den Anschlagnasen angeordneten gegenüberliegenden Schneiden unterschiedliche Spaltabstände aufweisen. Nachteilig bei diesem Werkzeug ist, daß es nur für ein Spezialkabel mit einem kleinen Außendurchmesser und einer kleinen Innenader verwendbar ist. Weiterhin ist bei diesem Werkzeug nachteilig, daß es aufgrund der unterschiedlichen Spaltabstände der Schneiden und der mittig angebrachten Anschlagnasen nicht für ein Rundkabel in herkömmlichen Außenabmessungen beispielsweise vom Durchmesser 8 bis 13 mm und größer verwendet werden kann.

Derartige bekannte Abisolierwerkzeuge weisen an ihren Halbschalen sogenannte Griffnasen auf, welche gegenüber der Schwenkachse beider Halbschalen angeordnet sind. Mit diesen Griffnasen erfolgt eine Krafteinleitung der Finger bzw. der Hand auf das Werkzeug mittels einer Hebelwirkung. Diese Griffnasen sind üblicherweise in der Mitte des Werkzeuges angeordnet. Es können auch mehr als eine Griffnase auf einer Halbschale angebracht sein. Als nachteilig wird hierbei gesehen, daß die Krafteinleitung über die Griffnasen in die Längsseiten der Halbschalen und dann erst von der Mitte der Halbschale in die Stirnseite der Halbschalen auf den dort eingebrachten Messersatz erfolgt. Ebenfalls können diese Griffnasen nachteilig als zu klein empfunden werden.

Die Aufgabe der Erfindung besteht somit darin, ein Abisolierwerkzeug zu schaffen, welches die oben genannten Nachteile nicht mehr aufweist, gegenüber den Werkzeugen des Standes der Technik einfacher in der Handhabung ist und gleichzeitig weitere Vorteile aufweist.

Diese Aufgabe wird erfindungsgemäß dadurch gelöst, daß die Griffnasen an gemeinsamen Stirnseiten der Halbschalen angeordnet sind und mindestens einen Messersatz für die Entfernung der Aderisolierung aufweisen, wobei der Messersatz für die Entfernung der Außenisolierung in den Stirnseiten der Halbschalen zwischen den Messern und einer Schwenkachse der Halbschalen angeordnet ist.

Vorteilhafte Weiterbildungen der Erfindung sind in den Unteransprüchen enthalten.

Der bekannte Aufbau des Abisolierwerkzeuges besteht aus zwei Halbschalen, welche um eine gemeinsame Achse gegeneinander verschwenkt werden können. Diese Halbschalen besitzen jeweils integrierte Griffnasen, welche im Bereich der Stirnseiten der Halbschalen angeordnet sind. Die Griffnasen sind in Längsrichtung der Halbschalen erweitert und weisen jeweils an ihrer Oberseite Griffmulden auf. Somit erhält das Abisolierwerkzeug eine große Krafteinleitungsfläche im Bereich der Stirnseiten der Halbschalen, in welchen Messersätze in bekannter Weise zur Abisolierung von Kabeln eingebracht sind.

Der Messersatz zur Abisolierung der Außenisolierung eines Kabels ist nahe an der Schwenkachse der beiden Halbschalen angeordnet, so daß in diesem Bereich vorteilhafterweise die größte Kraftwirkung über die Griffnasen auf die Halbschalen und somit auf die Messer erfolgen kann.

Die Griffmulden sind zweckmäßiger weise mit Noppen oder ähnlichen Mitteln versehen, um ein Abrutschen der Hand zu vermeiden und einen optimalen Kraftübergang zu ermöglichen.

Die Griffnasen sind im Bereich der Stirnseiten der Halbschalen quer zur Längsachse der Halbschalen verbreitert und bilden somit verlängerte Stirnseiten quer zur Längsachse der Halbschalen.

In den verlängerten Stirnseiten innerhalb der Griffnasen befinden sich weitere Messersätze. Diese Messersätze sind quer zur Längsachse der Halbschalen in bekannter Weise angeordnet.

Die Messersätze zur Abisolierung der Innenadern des Kabels sind innerhalb der Griffnase ebenfalls im Bereich der Stirnseiten der Halbschalen angeordnet und werden somit ebenfalls vorteilhaft durch die Krafteinwirkung auf die Griffnasen direkt beaufschlagt.

Der hintere Bereich der Halbschalen ist ähnlich den vorderen Griffnasen verbreitert quer zur Längsachse der Halbschalen. Diese Form, welche somit vorteilhaft korrespondierend zur Hand des Benutzers ausgebildet ist, ermöglicht hierdurch ein besonders leichtes Abziehen der zuvor durch die Messer abgetrennten Isolierung des Kabels.

In einer weiteren Ausgestaltung sind die hinteren Griffnasen jeweils mit einer Öffnung versehen, welche zum Anbinden des Abisolierwerkzeuges an einer Halterung, beispielsweise einer Kette, dient.

Die Rückseiten der Halbschalen sind vorteilhafterweise im Bereich der Längsachse der Halbschalen mit einer vorzugsweise halbkreisförmigen Ausnehmung versehen, durch welche das abzuisolierende Kabel hindurchgesteckt werden kann, wenn größere Abisolierlängen des Außenmantels erforderlich werden.

Die Innenadern des Kabels werden sehr häufig auf eine feststehende Länge abisoliert, die durch beispielsweise Klemmittel an elektrischen Geräten, Aderendhülsen und dergleichen mehr bestimmt sind. Für diesen Zweck ist in den vorderen Griffnasen in dem entsprechenden Abstand zu den Messern für die Abisolierung der Einzeladern ein Anschlagelement vorgesehen.

Dieses Anschlagelement ist in einer bevorzugten Ausführungsform steckbar und innerhalb der Griffnasen mit Rast- und Führungsmitteln versehen einsteckbar. Somit kann in vorteilhafter Weise die normierte Abisolierlänge der Einzeladern in einfacher Weise eingehalten werden, und gleichzeitig durch das Herausnehmen des Anschlagelementes jede beliebige Abisolierlänge der Einzeladern hergestellt werden.

In einer bevorzugten Ausführungsform kann das Anschlagelement sowohl in die eine Griffnase als auch in die andere Griffnase eingesteckt werden. Dadurch ist es besonders vorteilhaft möglich, dieses Abisolierwerkzeug sowohl für Rechts - als auch für Linkshänder zu verwenden. Die Griffnasen besitzen zu dem Anschlagelement korrespondierende Aufnahmen. Weiterhin sind innerhalb der Griffnasen parallel zur Längsachse der Halbschalen und hinter den Messersätzen für die Abisolierung der Einzeladern halbkreisförmige Rinnen angeordnet, welche dem Außendurchmesser der Einzeladern angepaßt sind. Dadurch ist eine besonders vorteilhafte Festlegung der Einzeladern beim Abisoliervorgang ermöglicht.

Das Anschlagelement wird so in die Aufnahme einer Griffnase eingesetzt, daß seine Anschlagfläche parallel zu dem korrespondierenden Messer und quer zur Längsachse der Halbschalen angeordnet ist.

In einer bevorzugten Ausgestaltung weisen die Halbschalen einen wannenförmigen Querschnitt auf.

Es ist zweckmäßig, daß die Halbschalen aus einem schlagzähen Kunststoffmaterial gebildet sind, wobei das Kunststoffmaterial bevorzugt Polyamid mit Glasfaserverstärkung ist, da somit eine vorteilhafte Elastizität des Werkzeuges erhalten wird.

Die Messersätze können jeweils einstückig oder auch mehrstückig ausgebildet sein. In einer bevorzugten Ausführungsform sind die Messer des Messersatzes mehrstückig und für die Abisolierung des Außenmantels des Kabels jeweils zueinander in einem Winkel geneigt angeordnet. Das ist besonders vorteilhaft, da dadurch mehr als zwei Einschnitte in den Kabelmantel erfolgen und somit die Drehbewegung zum Einschneiden der Isolierung vereinfacht und reduziert wird.

In einer anderen Ausgestaltungsform besitzt das Abisolierwerkzeug nur einen Messersatz zum Abisolieren der Einzeladern. In der bevorzugten Ausführungsform sind zwei Messersätze zum Abisolieren von Einzeladern mit unterschiedlichen Querschnitten vorgesehen. Dadurch daß der Messersatz zum Abisolieren des Außenmantels des Kabels so ausgebildet ist, daß nicht nur ein Kabeldurchmesser, sondern Kabeldurchmesser in einem bestimmten Bereich, z. B. von 8 bis 13 mm, verarbeitet werden können, ist das erfindungsgemäße Abisolierwerkzeug vorteilhaft vielseitig einsetzbar.

Die Messersätze zum Abisolieren der Einzeladern können auch aus mehr als zwei Messersätzen bestehen.

Eine bevorzugte Ausführungsform sieht vor, daß die Messersätze zum Abisolieren der Einzeladern Hohlkehlen aufweisen. Bei mehr als einem Messersatz zum Abisolieren der Einzeladern ist es vorteilhaft, daß die Messersätze einstückig ausgebildet sind.

Es ist auch denkbar, daß alle Messersätze auf einer Seite der Griffnasen und Halbschalen einstückig sind.

Somit ist ein für die Praxis vorteilhaft vielseitiges Abisolierwerkzeug geschaffen, welches ebenfalls besonders wirtschaftlich ist, da aufgrund seiner Vielseitigkeit zusätzliche Werkzeuge eingespart werden können.

Weitere Einzelheiten der Erfindung werden anhand von Ausführungsbeispielen mit Hilfe der Zeichnungen näher erläutert. Hierbei zeigt:
- Fig. 1: eine perspektivische Darstellung eines beispielhaften Abisolierwerkzeugs in geschlossener Stellung;
- Fig. 2: eine Ansicht aus Richtung X gemäß Figur 1;
- Fig. 3: eine perspektivische Ansicht des Abisolierwerkzeugs gemäß Figur 1 in geöffneter Stellung in einer Hand liegend;
- Fig. 4: die Ansicht gemäß Figur 2 mit einer weiteren Messerausführung.

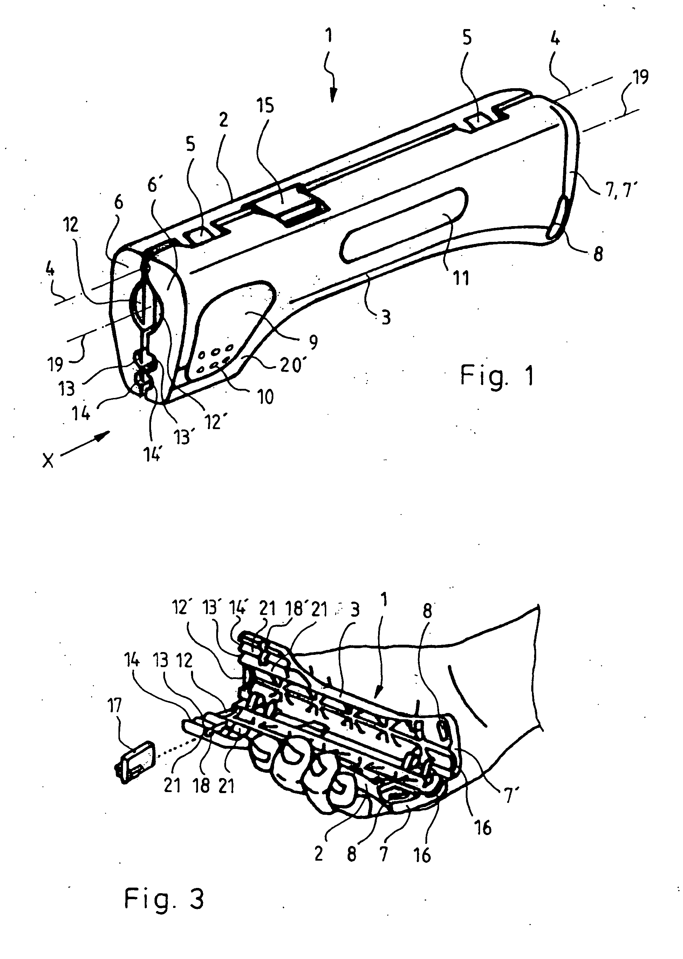

Figur 1 zeigt ein Ausführungsbeispiel eines Abisolierwerkzeuges 1 in einer perspektivischen Ansicht. Das Abisolierwerkzeug 1 besteht aus zwei Halbschalen 2 und 3, welche an ihren Längsseiten in bekannter Weise mit Gelenken 5 um eine Schwenkachse 4 verschwenkbar verbunden sind. Die in Figur 1 dargestellte Stellung des Abisolierwerkzeuges 1 ist die Nichtgebrauchsstellung, welche durch ein bekanntes Sperrelement 15 arretiert wird.

Die beiden Halbschalen 2, 3 besitzen jeweils eine Griffnase 20, 20'. Diese Griffnasen sind im stirnseitigen Bereich der Halbschalen 2, 3 angeordnet. Sie gehen in die Stirnseiten 6, 6' der Halbschalen 2, 3 über.

Innerhalb der Stirnseiten 6, 6' der Halbschalen 2, 3 und in der Verlängerung der Stirnseiten 6, 6' im Bereich der Griffnasen 20, 20' sind Messersätze 12, 12', 13, 13', 14, 14' angeordnet. Diese liegen in bekannter Weise quer zur Längsrichtung der beiden Halbschalen 2, 3, bzw. zu einer Längsachse 19 des Abisolierwerkzeuges 1.

Weiterhin umfassen die Griffnasen 20, 20' Griffmulden 9, welche Noppen 10 oder ähnlicheres aufweisen, die zu einer besseren Handhabung vorteilhaft sind.

Die Halbschalen 2, 3 sind im Bereich ihrer Rückseiten 7, 7' ebenfalls verbreitert, wobei sich die Verbreiterung quer zur Längsachse des Abisolierwerkzeuges 1 erstreckt. Die Rückseiten 7, 7' sind jeweils mit einer Ausnehmung 16 versehen, die es vorteilhaft ermöglicht, daß das abzumantelnde Kabel bei großen Abisolierlängen durch diese Ausnehmungen 16 hindurchgeführt werden kann (siehe Figur 3).

Diese Verbreiterungen besitzen an der Seite, welche der Schwenkachse 4 gegenüberliegt, jeweils eine Öffnung 8, welche vorteilhaft dazu dient, das Abisolierwerkzeug 1 beispielsweise an einer Kette oder dergleichen zu befestigen.

Weiterhin weisen die Halbschalen 2, 3 jeweils außen auf ihren Längsseiten ein Beschriftungsfeld 11 auf, welches in bekannter Weise mit Beschriftungen versehen sein kann.

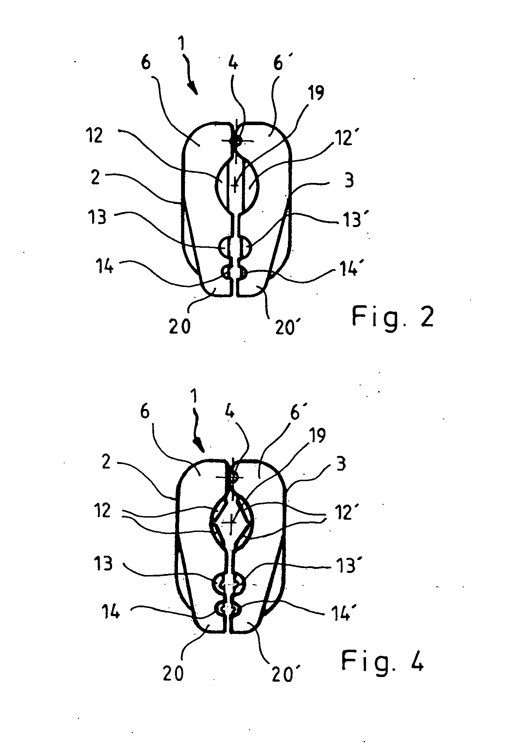

Figur 2 zeigt eine Ansicht auf das Abisolierwerkzeug 1 aus der mit X gekennzeichneten Richtung gemäß Figur 1. In dieser Ausgestaltungsform sind Messersätze 12, 12', 13, 13', 14, 14' mit geraden Schneiden in die gegenüberliegenden Innenseiten der Stirnseiten 6, 6' in bekannter Weise eingebracht und in bekannter Weise befestigt. Die Schneiden der Messersätze 12, 12', 13, 13', 14, 14' liegen sich in dieser dargestellten Nichtgebrauchsstellung des Abisolierwerkzeuges 1 parallel gegenüber.

Der Messersatz 12, 12', welcher um die Längsachse 19 angeordnet ist, dient zur Abisolierung des Außenmantels eines Kabels. Die Einzeladern dieses Kabels können jeweils mit einem weiteren Messersatz 13, 13' oder 14, 14' abisoliert werden. Die beiden Messersätze 13, 13' und 14, 14' sind vorteilhaft für zwei verschiedene Einzeladergrößen ausgelegt. Ebenfalls kann mit dem Messersatz 12, 12' nicht nur ein einziger Kabeldurchmesser, sondern eine größere Anzahl von verschiedenen Kabeldurchmessern innerhalb eines bestimmten Bereiches bearbeitet werden. Somit ergibt sich ein vorteilhaft vielseitiges Abisolierwerkzeug 1.

In der Figur 3 ist das Abisolierwerkzeug 1 in seiner geöffneten Stellung in einer Hand liegend dargestellt. Dieses ist die Benutzung des Abisolierwerkzeugs 1 durch einen Rechtshänder. Innerhalb der Griffnasen 20, 20' sind jeweils parallel zur Längsachse der jeweiligen Halbschale 2, 3 verlaufende Rinnen 21 eingebracht. Jeweils im Bereich der Stirnseite 6, 6' sind die Messersätze 13, 13', 14, 14' quer zur Längsachse der jeweiligen Halbschale 2, 3 und somit auch quer zu den Rinnen 21 verlaufend befestigt. Die Rinnen haben vorzugsweise einen halbkreisförmigen Querschnitt, welcher korrespondierend zu der jeweiligen abzuisolierenden Einzelader ausgebildet ist.

In einem bestimmten Abstand parallel zu den Messersätzen 13, 13', 14, 14' sind in den Griffnasen 20, 20' Aufnahmen 18, 18' für ein Anschlagelement 17 eingebracht.

Das Anschlagelement 17 kann in die Aufnahmen 18 oder 18' eingesteckt oder eingelegt werden. Dazu besitzen die Aufnahmen 18, 18' und das Anschlagelement 17 miteinander korrespondierende Rast- und Führungsmittel, welche beispielsweise aus am Anschlagelement 17 angebrachten Stegen und dazu korrespondierenden Führungsnuten in den Aufnahmen 18, 18' bestehen.

Der Abstand des Anschlagelementes 17 zu den Messersätzen 13, 13' und 14, 14' ist so ausgelegt, daß die allgemein übliche Abisolierlänge für Einzeladern von Kabeln eingehalten wird.

Das Anschlagelement 17 kann entweder in die Halbschale 2 oder in die Halbschale 3 in die jeweilige Aufnahme 18, 18' eingesteckt werden. Dadurch ist es möglich, daß das Abisolierwerkzeug 1 sowohl für Rechtshänder als auch für Linkshänder geeignet ist. In der Figur 3 ist die Handhabung für Rechtshänder dargestellt, wobei das Anschlagelement 17 in die Aufnahme 18 der ersten Halbschale 2 eingesteckt wird, was durch die punktierte Linie dargestellt ist. So kann die abzuisolierende Einzelader in die erste Halbschale 2, welche sich hierbei unten befindet, direkt an das Anschlagelement 17 in die passende Rinne 21 eingelegt werden.

Weiterhin ist es vorteilhaft möglich, durch Herausnehmen des Anschlagelementes 17 auch bei den Einzeladern beliebig große Abisolierlängen zu erhalten.

Der Messersatz 12, 12' ist nahe der Schwenkachse 4 in den Stirnseiten 6, 6' der beiden Halbschalen 2, 3 ebenfalls in bekannter Weise eingebracht. Dadurch daß die Griffnasen 20, 20' dicht am Einbauort der Messersätze 12, 12', 13, 13', 14, 14' angeordnet sind, ist vorteilhafterweise eine optimale Krafteinwirkung auf den Messersatz 12, 12' durch die Hebelwirkung der Griffnasen 20, 20' ermöglicht, was für den Abisoliervorgang des Außenmantels des Kabels erforderlich ist.

Die Ausgestaltung des Abisolierwerkzeuges 1 mit seinen beiden Halbschalen 2, 3 ist vorteilhafterweise so ausgeführt, daß durch die Verbreiterung der Halbschalen 2, 3 zu deren Rückseiten 7, 7' hin der Hand des Benutzers beim Abziehvorgang der zuvor durch die Messer getrennten Isolierung besonderen Halt gibt.

Die Handhabung des Abisolierwerkzeuges 1 ist im allgemeinen bekannt und wird hier nicht näher erläutert.

Die Halbschalen 2, 3 sind in ihrem Querschnitt wannenförmig ausgebildet und durch bekannte spritzgußtechnische Maßnahmen, beispielsweise durch Rippungen, verstärkt. Der wannenförmige Querschnitt mit seiner breiten Oberfläche bietet eine vorteilhafte Krafteinleitung von der Hand in das Abisolierwerkzeug 1.

Der Werkstoff der Halbschalen 2, 3 ist vorzugsweise Kunststoff mit einer Glasfaserverstärkung, welcher dadurch vorteilhafte Eigenschaften wie Schlagfähigkeit und Haltbarkeit erhält.

Es ist zweckmäßig, daß die Griffmulden 9 der Griffnasen 20, 20' mit Noppen 10 oder ähnlichem versehen werden, wodurch eine sicherere Handhabung des Abisolierwerkzeuges 1 ermöglicht wird.

Die Messersätze 12, 12', 13, 13', 14, 14' können jeweils auf einer Seite der Stirnseiten 6, 6' der Halbschalen 2, 3 einstückig als auch mehrstückig ausgeführt sein. Vorzugsweise sind die Messersätze 13, 13' und 14, 14' jeweils auf einer Seite in einem Stück ausgebildet, wobei der Messersatz 12, 12' einzeln ausgebildet ist.

In einer bevorzugten Ausführungsform ist der Messersatz 12, 12' jeweils auf einer Seite zweistückig, wobei die einzelnen Messerteile nicht in einer Längsrichtung angeordnet sind in der die anderen Messersätze 13, 13' und 14, 14' liegen, sondern in einem Winkel zu dieser Längsrichtung stehen. Dieses ist besonders vorteilhaft, da hiermit der Schneidvorgang in der Außenhülle der Isolierung des Kabels an zwei Stellen erfolgt und somit diesen Vorgang erleichtert.

In einer weiteren Ausgestaltungsform ist das Abisolierwerkzeug 1 mit nur einem Messersatz 13, 13' für die innenliegenden Kabeladern versehen. Es ist weiterhin denkbar, daß das Abisolierwerkzeug 1 auch mit mehr als zwei Messersätzen 13, 13' und 14, 14' wie das dargestellte Ausführungsbeispiel zeigt, für die innenliegenden Adern des Kabels versehen sein kann.

Figur 4 zeigt die Ansicht des Abisolierwerkzeuges 1 auf seine Stirnseiten 6, 6' aus der X-Richtung gemäß Figur 1 und gemäß Figur 2, wobei Varianten von Messersätzen 12, 12', 13, 13', 14, 14' verwendet werden. In dieser bevorzugten Ausführungsform sind die Messersätze 13, 13', 14, 14' einzeln oder jeweils beide mit einer Hohlkehle versehen, welche das Abisolieren der Einzeladern besonders einfach gestaltet.

### Bezugszeichenliste

- 1: Abisolierwerkzeug
- 2: erste Halbschale
- 3: zweite Halbschale
- 4: Schwenkachse
- 5: Gelenk
- 6, 6': Stirnseite
- 7, 7': Rückseite
- 8: Öffnung
- 9: Griffmulde
- 10: Noppen
- 11: Beschriftungsfeld
- 12, 12': erster Messersatz
- 13, 13': zweiter Messersatz
- 14, 14': dritter Messersatz
- 15: Sperrelement
- 16: Ausnehmung
- 17: Anschlagelement
- 18, 18': Aufnahme
- 19: Längsachse
- 20, 20': Griffnase
- 21: Rinne

## Patentansprüche

1. Abisolierwerkzeug zum Entfernen von Außenisolierungen und/oder Aderisolierungen elektrischer ein- oder mehradriger Kabel, bestehend aus an ihren Längsseiten verbundenen verschwenkbaren Halbschalen (2, 3) mit Griffnasen (20) und mit Messersätzen (12, 12', 13, 13', 14, 14') quer zur Längsrichtung der Halbschalen (2, 3), **dadurch gekennzeichnet, daß** die Griffnasen (20) an gemeinsamen Stirnseiten (6) der Halbschalen (2, 3) angeordnet sind und mindestens einen Messersatz (13, 13', 14, 14') für die Entfernung der Aderisolierung aufweisen, wobei der Messersatz (12, 12') für die Entfernung der Außenisolierung in den Stirnseiten (6) der Halbschalen (2, 3) zwischen den Messern (13, 13', 14, 14') und einer Schwenkachse (4) der Halbschalen (2, 3) angeordnet ist.

2. Abisolierwerkzeug nach Anspruch 1, **dadurch gekennzeichnet, daß** den Messersätzen (13, 13', 14, 14') in den Griffnasen (20) ein Anschlagelement (17) in einem bestimmten Abstand zugeordnet ist.

3. Abisolierwerkzeug nach Anspruch 2, **dadurch gekennzeichnet, daß** das Anschlagelement (17) in korrespondierende Aufnahmen (18) der Griffnasen (20) einsteckbar ausgebildet ist.

4. Abisolierwerkzeug nach Anspruch 3, **dadurch gekennzeichnet, daß** die Aufnahmen (18) und das Anschlagelement (17) Rast- und Führungsmittel aufweisen.

5. Abisolierwerkzeug nach einem der Ansprüche 2 bis 4, **dadurch gekennzeichnet, daß** das Anschlagelement (17) eine Anschlagfläche aufweist, welche quer zur Längsachse (19) angeordnet ist.

6. Abisolierwerkzeug nach einem der Ansprüche 1 bis 5, **dadurch gekennzeichnet, daß** die Griffnasen (20) außenliegende Griffmulden (9) und innenliegend hinter den Messersätzen (13, 13', 14, 14') parallel zur Längsachse (19) der Halbschalen (2, 3) mindestens eine angeordnete Rinne (21) mit halbkreisförmigem Querschnitt aufweisen.

7. Abisolierwerkzeug nach Anspruch 6, **dadurch gekennzeichnet, daß** die Griffmulden (9) mit Noppen (10) versehen sind.

8. Abisolierwerkzeug nach einem der Ansprüche 1 bis 7, **dadurch gekennzeichnet, daß** die Halbschalen (2, 3) quer ihrer Längsrichtung verbreiterte Rückseiten (7, 7') aufweisen.

9. Abisolierwerkzeug nach Anspruch 8, **dadurch gekennzeichnet, daß** die verbreiterten Rückseiten (7, 7') der Halbschalen (2, 3) Ausnehmungen (16) aufweisen.

10. Abisolierwerkzeug nach einem der Ansprüche 1 bis 9, **dadurch gekennzeichnet, daß** die Halbschalen (2, 3) einen wannenförmigen Querschnitt aufweisen.

11. Abisolierwerkzeug nach einem der Ansprüche 1 bis 10, **dadurch gekennzeichnet, daß** die Halbschalen (2, 3) aus einem schlagzähen Kunststoffmaterial gebildet sind.

12. Abisolierwerkzeug nach einem der Ansprüche 1 bis 11, **dadurch gekennzeichnet, daß** die gegenüberliegenden Messer des Messersatzes (12, 12') jeweils einstückig oder jeweils mehrstückig ausgebildet sind.

13. Abisolierwerkzeug nach Anspruch 12, , **dadurch gekennzeichnet, daß** die Messer des Messersatzes (12, 12') in mehrstückiger Ausbildung jeweils zueinander in einem Winkel geneigt sind.

14. Abisolierwerkzeug nach einem der Ansprüche 1 bis 13, **dadurch gekennzeichnet, daß** die Messer der Messersätze (13, 13', 14, 14') jeweils einstückig oder jeweils mehrstückig ausgebildet sind.

## Claims

1. Insulation-stripping tool for removing outer insulation and/or core insulation of electrical single-core or multi-core cables, comprising half-shells (2, 3), which can be pivoted and which are connected at their longitudinal sides, having grip tabs (20) and having sets of blades (12, 12', 13, 13', 14, 14') transverse with respect to the longitudinal direction of the half-shells (2, 3), **characterized in that** the grip tabs (20) are arranged on common front sides (6) of the half-shells (2, 3) and have at least one set of blades (13, 13' 14, 14') for removing the core insulation, the set of blades (12, 12') for removing the outer insulation being arranged in the front sides (6) of the half-shells (2, 3) between the blades (13, 13', 14, 14') and a pivot axis (4) of the half-shells (2, 3).

2. Insulation-stripping tool according to Claim 1, **characterized in that** a stop element (17) at a specific distance is associated with the sets of blades (13, 13', 14, 14') in the grip tabs (20).

3. Insulation-stripping tool according to Claim 2, **characterized in that** the stop element (17) is designed such that it can be inserted in corresponding receptacles (18) of the grip tabs (20).

4. Insulation-stripping tool according to Claim 3, **characterized in that** the receptacles (18) and the stop element (17) have latching means and guide means.

5. Insulation-stripping tool according to one of Claims 2 to 4, **characterized in that** the stop element (17) has a stop face which is arranged transversely with respect to the longitudinal axis (19).

6. Insulation-stripping tool according to one of Claims 1 to 5, **characterized in that** the grip tabs (20) have outer grip depressions (9) and, on the inside, behind the sets of blades (13, 13', 14, 14') and parallel to the longitudinal axis (19) of the half-shells (2, 3), at least one arranged channel (21) having a semicircular cross section.

7. Insulation-stripping tool according to Claim 6, **characterized in that** the grip depressions (9) are provided with knobs (10).

8. Insulation-stripping tool according to one of Claims 1 to 7, **characterized in that** the half-shells (2, 3) have widened rear sides (7, 7') transversely with respect to their longitudinal direction.

9. Insulation-stripping tool according to Claim 8, **characterized in that** the widened rear sides (7, 7') of the half-shells (2, 3) have cutouts (16).

10. insulation-stripping tool according to one of Claims 1 to 9, **characterized in that** the half-shells (2, 3) have a trough-shaped cross section.

11. Insulation-stripping tool according to one of Claims 1 to 10, **characterized in that** the half-shells (2, 3) are formed from an impact-resistant plastic material.

12. Insulation-stripping tool according to one of Claims 1 to 11, **characterized in that** the opposite blades of the set of blades (12, 12') are each of integral design or each of multi-part design.

13. Insulation-stripping tool according to Claim 12, **characterized in that** the blades of the set of blades (12, 12') in a multi-part design are each inclined towards one another at an angle.

14. Insulation-stripping tool according to one of Claims 1 to 13, **characterized in that** the blades of the sets of blades (13, 13', 14, 14') are each of integral design or each of multi-part design.

## Revendications

1. Outil de dénudage pour enlever des isolations extérieures et/ou des isolations de conducteurs de câbles électriques à un ou plusieurs conducteurs, composé de demi-coques (2, 3) susceptibles de pivoter, reliées au niveau de leurs côtés longitudinaux, avec des ergots de saisie (20) et avec des jeux de lames (12, 12', 13, 13', 14, 14') transversalement par rapport à la direction longitudinale des demi-coques (2, 3), **caractérisé en ce que** les ergots de saisie (20) sont disposés sur des faces frontales (6) communes des demi-coques (2, 3) et présentent au moins un jeu de lames (13, 13', 14, 14') pour l'enlèvement de l'isolation de conducteur, sachant que le jeu de lames (12, 12') prévu pour l'enlèvement de l'isolation extérieure est disposé dans les faces frontales (6) des demi-coques (2, 3), entre les lames (13, 13', 14, 14') et un axe de pivotement (4) des demi-coques (2, 3).

2. Outil de dénudage selon la revendication 1, **caractérisé en ce qu'**aux jeux de lames (13, 13', 14, 14') prévus dans les ergots de saisie (20) est associé un élément de butée (17) placé à un espacement déterminé.

3. Outil de dénudage selon la revendication 2, **caractérisé en ce que** l'élément de butée (17) est réalisé de façon à pouvoir être enfiché dans des logements (18) correspondants des ergots de saisie (20).

4. Outil de dénudage selon la revendication 3, **caractérisé en ce que** les logements (18) et l'élément de butée (17) présentent des moyens d'encliquetage et de guidage.

5. Outil de dénudage selon l'une des revendications 2 à 4, **caractérisé en ce que** l'élément de butée (17) présente une surface de butée, disposée transversalement par rapport l'axe longitudinal (19).

6. Outil de dénudage selon l'une des revendications 1 à 5, **caractérisé en ce que** les ergots de saisie (20) présentent des auges de saisie (9) extérieures et, intérieurement derrière les jeux de lames (13, 13', 14, 14'), parallèlement à l'axe longitudinal (19) des demi-coques (2, 3), présentent au moins une goulotte (21) disposée, avec une section transversale en forme de demi-cercle.

7. Outil de dénudage selon la revendication 6, **caractérisé en ce que** les auges de saisie (9) sont munies de tétons (10).

8. Outil de dénudage selon l'une des revendications 1 à 7, **caractérisé en ce que** les demi-coques (2, 3) présentent des faces arrière (7, 7') élargies transversalement par rapport à leur direction longitudinale.

9. Outil de dénudage selon la revendication 8, **caractérisé en ce que** les faces arrière (7, 7') élargies des demi-coques (2, 3) présentent des évidements (16).

10. Outil de dénudage selon l'une des revendications 1 à 9, **caractérisé en ce que** les demi-coques (2, 3) présentent une section transversale en forme d'auge.

11. Outil de dénudage selon l'une des revendications 1 à 10, **caractérisé en ce que** les demi-coques (2, 3) sont formées à partir d'un matériau synthétique résistant aux chocs.

12. Outil de dénudage selon l'une des revendications 1 à 11, **caractérisé en ce que** les lames opposées du jeu de lames (12, 12') sont réalisées chacune d'une seule pièce, ou chacune en plusieurs pièces,

13. Outil de dénudage selon la revendication 12, **caractérisé en ce que** les lames du jeu de lames (12, 12') réalisées en plusieurs pièces, chaque fois inclinées les unes par rapport aux autres de la valeur d'un angle.

14. Outil de dénudage selon l'une des revendications 1 à 13, **caractérisé en ce que** les lames des jeux de lames (13, 13', 14, 14') sont réalisées chacune d'une seule pièce, ou bien chacune en plusieurs pièces.
